# EUROPEAN PATENT APPLICATION

(11) **EP 0 113 325 A2**
(43) Date of publication of application: **11.07.1984**
(21) Application number: 83830281.8
(22) Date of filing: 27.12.1983
(51) Int. Cl.: F24J 3/02

(54) **Solar collector**

(30) Priority: 29.12.1982 IT 2502082
(71) Applicant: Carta, Orfeo, I-36030 Costabissara Vicenza (IT); Giaretta, Leda Maria, I-36030 Costabissara Vicenza (IT)
(72) Inventor: Carta, Orfeo, I-36030 Costabissara Vicenza (IT); Giaretta, Leda Maria, I-36030 Costabissara Vicenza (IT)
(74) Representative: Vannini, Torquato

(57) **Abstract**

(57) A solar collector of the so-called flat-surface type is described in which the thermal component of the solar radiation is trapped in a chamber formed between two opposing glass sheets and is reflected between them until exhaustion. One sheet is transparent to infra-red radiation (8000 A) and the other is transparent to ultra-violet radiation (4000 A); the latter sheet has a mirrored surface outside the chamber for reflecting the radiation. When the two sheets are spaced apart by a multiple of 8000A an aerial effect is achieved within the chamber defined thereby, which increases the thermal yield of the solar collector.

## Description

The present invention relates to a solar collector of the so-called flat-surface type supported by a surrounding frame, in which the absorbec so2ar radiation is converted into heat by heating water or some othPr fluid passing through a plurality of tubes carried by the frame.

It is well known that solar collectors have the function of picking up solar radiation for transfer of the absorbed heat content to a fluid, usually water, whereby the heat may be accumulated and transferred to a utiliser.

In order to obtain the best yield, it is necessary for a solar collector to be able to pick up the maximum solar radiation available and prevent any heat loss to the exterior either by convection or radiation.

In almost all cases the solar collectors made until now have included a support frame which is essentially rectangular, a glass covering sheet, and an absorbent plate generally of aluminium, in which are formed ducts for the fluid (water) for absorbing the collected heat and transferring the heat to the utiliser. The glass sheet and the absorbent plate are supported around their peripheries by the frame and define a sealed space between them. The plate is generally coated with a special black varnish.

In these collectors, the heat in the solar radiation picked up is absorbed by a technique based on the so-called "greenhouse effect". For this purpose, a glass sheet of suitable thickness is used, the function of which is essentially that of limiting the heat losses by convection and radiation, given that the glass is opaque to infra-red which is precisely the field of the radiation emitted by the absorbent plate (or tube bundle) at its normal working temperature.

Solar collectors of this type, although becoming ever more widely used in various fields, have recognised technical disadvantages which have not previously been overcome.

Indeed, it is known that the thermal yield of such solar collectors falls rapidly as the temperature of the absorbent plate increases, and that the temperatures at which the yield is negligible are reached rapidly because of the very "greenhouse effect" which is sought.

Moreover, the glass sheet which is itself used to achieve the desired greenhouse effect by preventing heat losses by radiation from the absorbent plate to the exterior of the panel is opaque to infra-red radiation which is well known to be the solar radiation having the greatest heat content. Consequently, the collectors of the prior art do not make use of this type of solar radiation, so that their usefulness is limited to daytime when visible radiation (light) is present and they are not able to operate satisfactorily under an overcast sky or in fog. The use of solar collectors of the prior art is thus severely limited.

The problem behind this invention is that of providing a solar collector having structural and functional characteristics such as to overcome definitively the disadvantages mentioned above.

This problem is solved according to the invention by a solar collector of the so-called flat-surface type, which includes a surrounding frame and is characterised in that it comprises:
- a sheet transparent to a part of the solar radiation having a wavelength between at least 6800 and 8000 Å, the sheet being supported around its periphery by the frame,
- a wall having a surface which reflects solar radiation having at least the said wavelength, the wall being supported around its periphery by the frame parallel to and spaced from the transparent sheet, and the reflective surface of the wall facing the transparent sheet,
- a chamber formed between the transparent sheet and the wall, and
- a plurality of ducts supported in the chamber in a mutually spaced relationship and terminating at respective inlet and outlet headers for water or other fluid.

To advantage and in accordance with a preferred embodiment, the sheet is transparent to 80% of the solar radiation having a wavelength between at least 6800 and 8000 A.

In accordance with a further embodiment, a solar collector according to the invention is characterised in that it comprises:
- a first sheet transparent to a part of the solar radiation having a wavelength between at least 6800 A and 8000 A and supported around its periphery by the frame,
- a second sheet transparent to a part of the solar radiation having a wavelength between at least 3500 A and 4000 A and supported around its periphery by the frame parallel to and spaced from the first sheet,
- a chamber formed between the first and second sheets,
- a plurality of ducts supported within the chamber in a mutually spaced relationship and terminating at respective inlet and outlet headers for water or other fluid, and
- a wall having a surface which reflects at least the said solar radiations, the wall being supported in the frame outside the chamber in substantial contact with one of the sheets, and the reflective surface of the wall facing the other of the sheets.

To advantage, the first sheet is transparent to 80% of the solar radiation having a wavelength of 8000 A, the second sheet is transparent to 85% of the solar radiation having a wavelength of 4000 A, and the distance of the sheets from the reflective surface of the wall is a whole multiple of 8000 A.

Contrary to what occurs in solar collectors of the known type, in which the exploitation of the thermal component of the solar radiation is based on the "greenhouse effect", in a solar collector according to the invention this exploitation is based on the trapping of a part of the electromagnetic radiation corresponding to the infra-red (6800 to 8000 Å) between the transparent plate and the reflective wall. Moreover, when the panel is of the type comprising two sheets transparent to the infra-red and the ultra-violet respectively, and when the distance between, for example, the sheet transparent to the infra-red and the reflecting wall is a multiple of 8000 Å, a sort of aerial effect for the electromagnetic radiation of 4000 and 8000 A is added to the trapping of the thermal radiation.

As a result of this, high temperatures are reached rapidly in the chamber between the sheets, which thus act as a "resonance chamber" with no deterioration in the thermal efficiency of the solar collector.

Further characteristics and advantages of the invention will become clearer from the description of one embodiment of a solar collector according to the invention, which follows with reference to the appended drawings given purely by way of non-limiting example, in which:

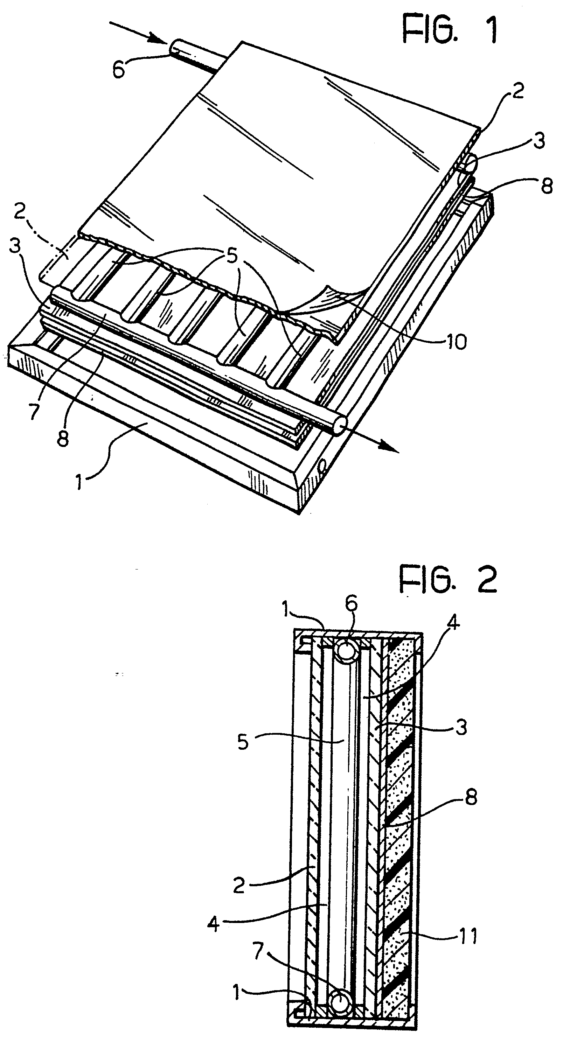

Figure 1 is a schematic perspective view of a solar collector according to the invention, with its parts separated;
Figure 2 is a schematic cross-section of the solar collector of Figure 1.

With reference to the drawings, a solar collector according to the invention comprises a support frame 1 of substantially rectangular type, a first glass sheet 2 supported around its periphery in the frame 1 by known means, not shown, and a second glass sheet 3 also supported around its periphery in the frame 1, paralleJ to and spaced from the glass sheet 2.

The sheet 2 is of glass transparent to solar radiation having a wavelength between at least 6800 A and 8000 A, that is to say, transparent to the infra-red. More particularly and preferably, the glass sheet 2 is transparent to 80% of the solar radiation having this wavelength and, still more preferably, is transparent to 80% of the electromagnetic radiation having a wavelength of 8000 Å.

Such a glass sheet is formed by conventional methods using well known compositions suitable for the purpose, that is to say, compositions including suitable quantities of one or more constituents chosen, for example, from silica, calcium oxide, magnesium oxide, alumina and the like.

Alternatively, it may be constituted by ordinary glass having a film 10 of suitable plastics material, such as polymethyl methacrylate, polyester, polyethylene terephthalate, epoxide, polytetrafluoroethylene, polytrifluoromonochloroethylene, or polyvinyl chloride, which may be suitably coloured with appropriate pigments.

The sheet 3 is of glass transparent to solar radiation having a wavelength between at least 3500 and 4000 A. Preferably, the sheet is transparent to 85% of the solar radiation having this wavelength and, more preferably, is transparent to 85% of the solar radiation having a wavelength of 4000 Å (ultra-violet).

The sheets 2 and 3 together define, with the frame 1, a chamber 4 which is sealed from the exterior, in which is supported a plurality of tubular ducts 5. The tubular ducts 5 are mutually spaced by a predetermined distance and are connected at opposite ends to respective headers 6, 7 in communication with the exterior of the chamber 4 of the frame 1.

The solar collector of the invention also includes a wall 8 which is supported around its periphery in the frame in substantial contact with one of the sheets 2, 3. This wall 8 has a surface which reflects solar radiation of the said wavelengths (3500-4500; 6800-8000, the reflective surface facing the other glass sheet. The distance between the reflective surface 8 and the glass sheet 2 or 3 exposed to the solar radiation is a multiple of 8000 A.

If required, the solar collector so formed may be provided with a layer or thermally insulating material 11 of suitable thickness and/or possible accessories of the type already widely used in solar panels of the prior art.

The solar collector of the invention may be used in two different arrangements, that is, with the sheet 2 facing the sun and the reflective surface 8 in contact with the sheet 3 and facing the sheet 2, or vice versa, with the sheet 3 facing the sun and the reflective surface 8 in contact with the sheet 2. In the first case radiation having a wavelength corresponding to the infra-red (about 8000 Å) will mainly be picked up, trapped and best absorbed, while in the second case the radiation corresponding to the ultra-violet (4000 Å) will be mainly picked up and trapped. It should be noted that, in the first case, the infra-red radiation can be picked up, trapped and absorbed in the form of heat even when the sky is overcast or foggy, or even after sunset.

About 20% of the infra-red radiation incident on the sheet 2 is reflected, while 80% thereof passes into the chamber 4 and is reflected from the reflective surface 8. 80% of this reflected infra-red radiation passes through the sheet 2 to the exterior of the collector, while 20% thereof is again directed at the reflective surface 8 and so on. This is the aforementioned reflective effect whereby the desired radiation with a high heat content is trapped with th_{E} resulting improved usr of the heat content of the solar radiation incident on the collector of the invention.

Ar. aerial effect is added to this effect by a synergism which is not clearly explained, particularly when the distance between the sheet 2 (or 3) and the reflective surface 8 is equal to a multiple of 8000 Å.

It has. been found from repeated and well controlled experiments that a solar collector of the invention allows higher temperatures to be reached in shorter times than a collector of the prior art having the same exposed surface and water flow rate. It has also been found that the thermal yield of a collector of the invention is not reduced with an increase in the temperature but regains substantially constant when the temperature of the ducts 5 reaches values of the order of 80 to 85°C.

It should be noted that the aerial effect disappears completely when the solar collector of the invention is made in a simplified version without the sheet 3 which is transparent to solar radiation of 3500 to 4000 Å (ultra-violet).

Finally, it has been found that the thermal yield of a solar collector of the invention can be further increased when the chamber 4 is evacuated to 20% of atmospheric pressure and atmospheric pressure is re-established by the admission of a gaseous mixture constituted by xenon and neon, preferably in a 4:1 ratio.

## Claims

1. Solar collector of the so-called flat-surface type, including a surrounding frame (1) and characterised in that it comprises:
- a sheet (2) transparent to a part of the solar radiation naving a wavelength between at least 6800 and 800C Å, the sheet being supported around its periphery by the frame,
- a wall (8, having a surface which reflects solar radiation having at least the said wavelength, the wall (8) being supported around its periphery by the frame (1) parallel to and spaced from the transparent sheet (2), and the reflective surface of the wall (8) facing the transparent sheet (2),
- a chamber (4) formed between the transparent sheet (2) and the wall (8),
- a plurality of ducts (5) supported in the chamber (4) in a mutually spaced relationship and terminating at respective inlet and outlet headers (6, 7) for water or other fluid.

2. Solar collector according to Claim 1, characterised in that the sheet (2) is transparent to 80% of the solar radiation having 0 a wavelength between at least 6800 and 8000 A.

3. Solar collector according to Claim 2, characterised in that the sheet (2) is transparent to 80% of the solar radiation having 0 a wavelength of 8000 A.

4. Solar collector according to any one of Claims 1 to 3, characterised in that the distance between the sheet (2) and the reflective surface of the wall (8) is a multiple of 8000 A.

5. Solar collector of the so-called flat-surface type, including a surrounding frame and characterised in that it comprises:
- a first sheet (2) transparent to a part of the solar radiation having a wavelength between at least 6800 A and 8000 Å and supported around its periphery in the frame (1),
- a second sheet (3) transparent to a part of the solar radiation having a wavelength between at least 3500 Å and 4000 Å and supported around its periphery by the frame (1) parallel to and spaced from the first sheet,
- a chamber formed between the first and second sheets (2, 3),
- a plurality of ducts (5) supported within the chamber (4) in a mutually spaced relationship and terminating at respective inlet and outlet headers (6, 7) for water or other fluid,
- a wall (8) having a surface which reflects at least the said solar radiations, the wall (8) being supported in the frame (1) outside the chamber (4) in substantial contact with one of the sheets (2, 3), and the reflective surface of the wall (8) facing the other of the sheets.

6. Solar collector according to Claim 5, characterised in that the first sheet (2) is transparent to 80% of the solar radiation having a wavelength of 8000 A, the second sheet (3) is transparent to 85% of the solar radiation having a wavelength of 4000 A, and the distance of the sheets (2, 3) from the reflective surface of the wall (8) is a whole multiple of 800G A.

7. Solar collector according to Claims 5 and 6, characterised in that at least one gas chosen from neon and xenon is present in the chamber.

8. Solar collector according to Claim 7, characterised in that a gaseous mixture comprising xenon and neon in a ratio of 4:1 is present in the chamber (4).
